# EUROPEAN PATENT APPLICATION

(11) **EP 4 852 148 A1**
(43) Date of publication of application: **09.12.2026**
(21) Application number: 25877662.4
(22) Date of filing: 08.09.2025
(51) Int. Cl.: H01M 10/63, H01M 10/613, H01M 10/6556, H01M 10/625, H01M 10/633, H01M 10/6568, H01M 10/42, H01M 10/6552

(54) **BATTERY COOLING CONTROL APPARATUS AND BATTERY COOLING CONTROL METHOD**

(30) Priority: 08.10.2024 KR 20240136609; 07.03.2025 KR 20250030079; 02.09.2025 KR 20250124215
(71) Applicant: LG Energy Solution, Ltd., Seoul 07335 (KR)
(72) Inventor: LEE, Bum-Hee, Daejeon 34122 (KR)
(74) Representative: Plasseraud IP
(86) International application number: PCT/KR2025/013866
(87) International publication number: WO 2026/079685

(57) **Abstract**

A battery cooling control apparatus and a battery cooling control method are provided. The battery cooling control apparatus according to the present disclosure includes a cooling network provided for cooling a plurality of battery blocks, and a control unit configured to determine a target cooling medium path according to battery monitoring information indicating a state parameter of each of the plurality of battery blocks, and control the cooling network to form the target cooling medium path between an inlet and an outlet of the cooling network.

## Description

### TECHNICAL FIELD

The present disclosure relates to battery cooling control for thermal propagation risk prevention and quick fire suppression.

This application is based on and claims priority from Korean Patent Application No. 10-2024-0136609 filed on October 8, 2024, Korean Patent Application No. 10-2025- 0030079 filed on March 7, 2025 and Korean Patent Application No. 10-2025-0124215 filed on September 2, 2025, the disclosures of which are incorporated herein in its entirety by reference.

### BACKGROUND ART

Recently, there has been a rapid increase in the demand for portable electronic products such as laptop computers, video cameras and mobile phones, and with the extensive development of electric vehicles, accumulators for energy storage, robots and satellites, many studies are being made on high performance batteries that can be repeatedly charged and discharged.

Batteries on the market now include nickel-cadmium batteries, nickel-hydrogen batteries, nickel-zinc batteries, lithium batteries and the like, and among them, lithium batteries have little or no memory effect, and thus they are gaining more attention than nickel-based batteries for their advantages including that recharging can be done whenever it is convenient, the self-discharge rate is very low and energy density is high.

A battery pack for a battery system (for example, an electric vehicle or an energy storage system) requiring large capacity and high voltage may include a few to a few hundred battery cells connected either in series or in parallel, or both.

The close-packed structure of the battery cells within the limited space of the battery pack is beneficial for high energy density, but abnormal conditions of some battery cells easily have negative impacts on the remaining battery cells. Typically, when thermal runaway occurs in a certain battery cell due to overheating or an internal circuit short, the rapid spread of the thermal runaway to adjacent battery cells, so-called 'thermal propagation' may occur.

### DISCLOSURE

### Technical Problem

The present disclosure is designed to address the above-described problems, and therefore the present disclosure is directed to providing an apparatus and method for adjusting a cooling medium path between an inlet and an outlet of a cooling network according to the state of each of a plurality of battery blocks included in a battery pack to effectively suppress the risk of thermal propagation in the plurality of battery blocks.

These and other objectives and advantages of the present disclosure may be understood from the following description and will become apparent from the embodiments of the present disclosure. Also, it will be easily understood that the objectives and advantages of the present disclosure may be realized by the means set forth in the appended claims and a combination thereof.

### Technical Solution

A battery cooling control apparatus according to an aspect of the present disclosure includes a cooling network provided for heat exchange with each of a plurality of battery blocks, and a control unit configured to determine a target cooling medium path according to battery monitoring information indicating a state parameter of each of the plurality of battery blocks, and control the cooling network such that the target cooling medium path is formed between an inlet and an outlet of the cooling network.

The cooling network may include a plurality of cooling medium pipes fluidly connected to each other through a plurality of branch nodes located corresponding to the plurality of battery blocks, and a plurality of electronic valves respectively installed at connection portions of the plurality of branch nodes.

The control unit may be configured to determine the target cooling medium path based on identification information of each abnormal battery block among the plurality of battery blocks. The abnormal battery block may be a battery block having a thermal runaway risk among the plurality of battery blocks.

The target cooling medium path may be a cooling medium path passing through each branch node located corresponding to each abnormal battery block among a plurality of cooling medium paths providable by the cooling network.

The target cooling medium path may be a cooling medium path passing through each branch node located corresponding to each abnormal battery block and each adjacent battery block among a plurality of cooling medium paths providable by the cooling network. The adjacent battery block may be a battery block adjacent to the abnormal battery block.

The battery cooling control apparatus may further include a cooling medium circulation unit configured to induce circulation of the cooling medium through the inlet and the outlet of the cooling network.

The control unit may be configured to perform, when it is determined that the cooling network is damaged, at least one of a first fire extinguishing operation of increasing an amount of cooling medium entering the inlet of the cooling network or a second fire extinguishing operation of reducing an amount of cooling medium exiting the outlet of the cooling network.

A battery pack according to another aspect of the present disclosure includes the battery cooling control apparatus.

An electric vehicle according to still another aspect of the present disclosure includes the battery pack.

A battery cooling control method according to yet another aspect of the present disclosure includes determining a target cooling medium path according to battery monitoring information indicating a state parameter of each of a plurality of battery blocks, and controlling a cooling network provided for heat exchange with each of the plurality of battery blocks to form the target cooling medium path between an inlet and an outlet of the cooling network.

Determining the target cooling medium path may be performed based on identification information of each abnormal battery block among the plurality of battery blocks. The abnormal battery block may be a battery block having a thermal runaway risk among the plurality of battery blocks.

The target cooling medium path may be a cooling medium path passing through each branch node located corresponding to each abnormal battery block among a plurality of cooling medium paths providable by the cooling network.

The target cooling medium path may be a cooling medium path passing through each branch node located corresponding to each abnormal battery block and each adjacent battery block among a plurality of cooling medium paths providable by the cooling network. The adjacent battery block may be a battery block adjacent to the abnormal battery block.

The battery cooling control method may further include performing at least one of a first fire extinguishing operation of increasing an amount of cooling medium entering the inlet of the cooling network or a second fire extinguishing operation of reducing an amount of cooling medium exiting the outlet of the cooling network when it is determined that the cooling network is damaged based on flow information of a cooling medium circulation unit configured to induce circulation of the cooling medium through the inlet and the outlet of the cooling network.

A computer-readable medium according to further another aspect of the present disclosure may have recorded thereon a program for causing a computer to perform the battery cooling control method.

### Advantageous Effects

According to at least one of the embodiments of the present disclosure, the cooling medium path from the inlet of the cooling network to its outlet may be adjusted according to the state of each of the plurality of battery blocks included in the battery pack.

According to at least one of the embodiments of the present disclosure, in a situation where no thermal runaway risk is detected in any of the plurality of battery blocks, the cooling medium path for evenly cooling all the battery blocks may be formed within the cooling network.

According to at least one of the embodiments of the present disclosure, in a situation where the thermal runaway risk in at least one of the plurality of battery blocks is detected, the cooling medium path for focused cooling of some of the plurality of battery blocks may be formed within the cooling network.

According to at least one of the embodiments of the present disclosure, when it is determined that a damage site (a location at which damage occurred due to high temperature of the battery pack) is found in the cooling network, cooling medium leakage out of the cooling network through the damage site may be deliberately accelerated. The leaking cooling medium may directly act on the battery pack as a fire extinguishing material, thereby helping to reduce the fire severity at the high temperature location of the battery pack causing damage to the cooling network.

The effects of the present disclosure are not limited to the above-mentioned effects, and these and other effects will be clearly understood by those skilled in the art from the appended claims.

### BRIEF DESCRIPTION OF THE DRAWINGS

The accompanying drawings illustrate the exemplary embodiments of the present disclosure and together with the following detailed description, serve to provide a better understanding of the technical aspects of the present disclosure, and thus the present disclosure should not be constructed as being limited to any of the drawings.
FIG. 1 is a diagram schematically showing a configuration of an electric vehicle including a battery cooling control apparatus according to an embodiment of the present disclosure.
FIG. 2 is a diagram referenced in describing an example of a connection relationship between a battery block and a sensing unit shown in FIG. 1.
FIGS. 3 to 5 are diagrams referenced in briefly describing the architecture of a cooling network according to the present disclosure.
FIG. 6 is a diagram referenced in describing a reference cooling medium path that may be provided in a cooling network.
FIG. 7 is a flowchart referenced in briefly describing a battery cooling control method according to another embodiment of the present disclosure.
FIG. 8 is a flowchart referenced in briefly describing an example of a set of routines that may be included in step S710 of FIG. 7.
FIG. 9 is a flowchart referenced in briefly describing an example of a set of routines that may be included in step S820 of FIG. 8.
FIGS. 10 and 11 are diagrams referenced in describing the method of FIG. 9.
FIG. 12 is a diagram schematically showing a configuration of a cooling medium circulation unit according to an embodiment of the present disclosure.
FIG. 13 is a flowchart referenced in briefly describing a battery cooling control method according to still another embodiment of the present disclosure.
FIGS. 14 and 15 are diagrams referenced in describing an exemplary situation of cooling medium leakage into a battery pack through a damage site of a cooling network.

### BEST MODE

Hereafter, the exemplary embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are embodiments of the present disclosure to describe the technical aspects of the present disclosure but not intended to be limiting, so it should be understood that a variety of other equivalents and modifications could be made thereto at the time the application was filed.

The terms including the ordinal numbers such as "first", "second" and the like, are used to distinguish one element from another among various elements, but not intended to limit the elements by the terms.

Unless the context clearly indicates otherwise, the terms "comprise" and "include" when used in this specification, specify the presence of the stated elements, but do not preclude the presence or addition of one or more other elements. Additionally, the term "unit" as used herein refers to a processing unit of at least one function or operation, and may be implemented by hardware and software either alone or in combination.

In addition, throughout this specification, it will be further understood that when an element is referred to as being "connected to" another element, it can be directly connected to the other element or intervening elements may be present.

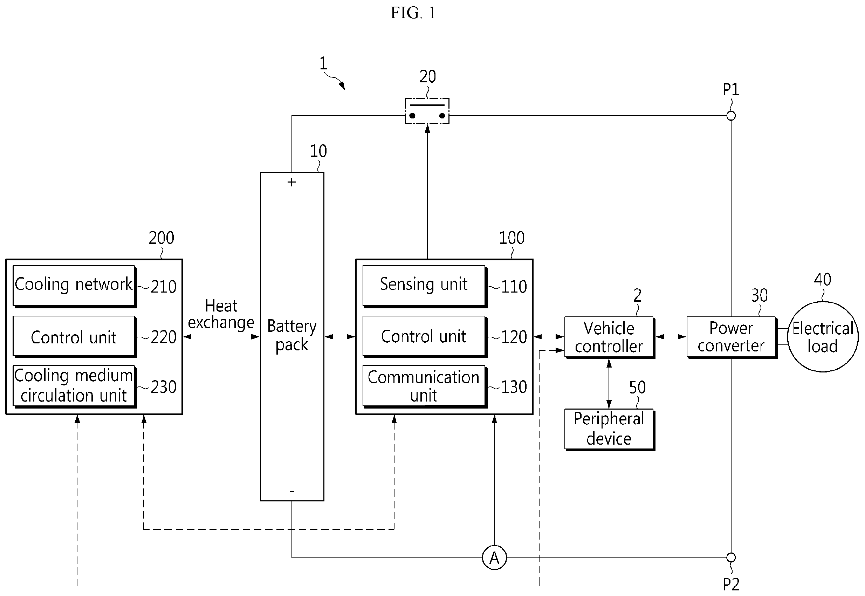

FIG. 1 is a diagram schematically showing a configuration of an electric vehicle including a battery cooling control apparatus according to an embodiment of the present disclosure.

Referring to FIG. 1, the electric vehicle 1 may include a battery pack 10, a relay 20, a vehicle controller 2, a power converter 30, an electrical load 40, a battery management system 100 and the battery cooling control apparatus 200. The electric vehicle 1 may further include a peripheral device 50.

The battery pack 10 includes a plurality of battery blocks BB₁~BB_{N} (N is a natural number of 2 or greater), a first charging/discharging terminal P1 and a second charging/discharging terminal P2_{.}

In this specification, in the description that is shared between the plurality of battery blocks BB₁~BB_{N,} the symbol 'BB' or 'BBₖ' is affixed to the battery block. k is a natural number that is equal to or smaller than N.

The plurality of battery blocks BB₁~BB_{N} may be connected to each other between the first charging/discharging terminal P₁ and the second charging/discharging terminal P2 either in series or in parallel, or both.

The battery block BB may include at least one battery cell, and may be interchangeably used with the term 'cell unit', 'cell group', 'cell array' or 'cell assembly'.

The battery block BB may include one battery module, or two or more battery modules. When the battery block BB includes a plurality of battery modules, the plurality of battery modules may be connected either in series or in parallel, or both. Each battery module may include an assembly of two or more battery cells. When the battery module includes a plurality of battery cells, the plurality of battery cells may be connected either in series or in parallel, or both.

In an embodiment, each of the plurality of battery blocks BB₁~BB_{N} may include a case accommodating the battery cells BC. In this case, the plurality of battery blocks BB₁~BB_{N} may be physically separated from each other by their respective cases, and individually housed or separated in a pack case of the battery pack 10.

In another embodiment, each of the plurality of battery blocks BB₁~BB_{N} may be directly housed in the pack case of the battery pack 10 without the case. That is, each of the plurality of battery blocks BB₁~BB_{N} may be a group of battery cells BC by randomly grouping one or two or more of the battery cells BC directly housed in the battery pack 10, or grouping the battery cells BC according to a specific criterion, taking into account the layout of the battery pack 10, circuit wiring with the battery management system 100 or the sensing range of each of a plurality of sensing circuits SB₁~SB_{N}. In this case, the battery pack 10 may have a cell-to-pack (CTP) structure in the respect that the battery cells BC are directly housed in the pack case without the case for each of the plurality of battery blocks BB₁~BB_{N}.

In this specification, the battery cell refers to a basic unit of an electricity storage device capable of charging and discharging on its own, and is not limited to a particular one and may include, for example, any rechargeable battery cell such as a lithium-ion cell.

The relay 20 is installed on a power line connecting the battery pack 10 to the charging/discharging terminals P1, P2. FIG. 1 shows that the relay 20 is connected between a positive terminal of the battery pack 10 and the charging/discharging terminal P1, but the electric vehicle 1 may further include an additional relay 20 connected between a negative terminal of the battery pack 10 and the charging/discharging terminal P2. The relay 20 is controlled to be turned on/off in response to a switching signal from the battery management system 100 or the vehicle controller. According to an embodiment of the present disclosure, the relay 20 may include a mechanical contactor that is turned on/off by the magnetic force of a coil, or a semiconductor switch such as a Metal Oxide Semiconductor Field Effect transistor (MOSFET).

The battery management system 100 includes a sensing unit 110 and a control unit 120. The battery management system 100 may further include a communication unit 140.

The sensing unit 110 generates battery monitoring information indicating the state of each of the plurality of battery blocks BB₁~BB_{N} of the battery pack 10.

The sensing unit 110 may periodically or aperiodically measure at least one state parameter of each of the plurality of battery blocks BB₁~BB_{N,} and provide the battery monitoring information indicating each of the measured state parameters to the control unit 120.

The state parameter of the battery block BBₖ may indicate a temperature of the battery block BBₖ (referred to as 'block temperature'), a cell voltage of each battery cell BC included in the battery block BB, or a secondary parameter (for example, an amount of change, a change ratio) that may be derived by applying a mathematical function. Besides, the state parameter is not limited to a particular type and may include any type of state parameter indicating the degree of thermal anomaly of the battery block BBₖ directly or indirectly.

A current sensor A is installed on the power line connecting the battery pack 10 to the charging/discharging terminals P1, P2 to measure the current flowing through the battery pack 10. The current sensor A may be included in the sensing unit 110.

The control unit 120 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors, or electrical units for performing other functions.

The control unit 120 is operably coupled to at least one of the sensing unit 110 or the communication unit 130. In this instance, operably coupled refers to connection to enable signal transmission and reception in one or two directions.

The control unit 120 may have a memory device. The memory device may include at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory device may store data and programs required for the operations by the control unit 120. The memory device may store data indicating the results of the operations by the control unit 120.

The control unit 120 may determine whether each of the plurality of battery blocks BB₁~BB_{N} is abnormal based on the state data received from the sensing unit 110. When at least one of the plurality of battery blocks BB₁~BB_{N} is diagnosed as abnormal, the control unit 120 is configured to perform at least one safety operation for the battery pack 10.

The safety operation may include the turn-off control of the relay 20. The safety operation may include battery cooling control as described below.

The power converter 30 may include at least one of a direct current (DC)-alternating current (AC) inverter or a DC-DC converter. The power converter 30 may convert DC power (discharge power) from the battery pack 10 into AC power and supply it to the electrical load 40 during discharging of the battery pack 10. The electrical load 40 may include a three-phase AC motor that generates kinetic energy for the driving of the electric vehicle 1.

The control unit 120 may determine, based on the battery monitoring information, a state of charge (SOC) of each of the plurality of battery blocks BB₁~BB_{N}, and may further determine a state of health (SOH).

The SOC of the battery block BB is the ratio of the remaining capacity of the battery block to its maximum capacity (Full Charge Capacity (FCC)), and is usually represented in a range of 0 to 100% or 0 to 1. The remaining capacity indicates the amount of charge currently stored in the battery block BB.

The SOH of the battery block BB is the ratio of the maximum capacity of the battery block BB to its design capacity, and is usually represented in a range of 0 to 100% or 0 to 1. The design capacity indicates the maximum amount of charge the battery block BB can store when it was new. As the battery block BB degrades, the maximum capacity gradually decreases from the design capacity. Each of the SOC and SOH may be estimated from one of known techniques or a combination of two or more thereof, and its detailed description is omitted.

The communication unit 130 includes at least one communication circuit to support wired or wireless communication between the control unit 120 and the vehicle controller 2, the peripheral device 50 and/or the battery cooling control apparatus 200. The wired communication may include, for example, controller area network (CAN) communication, and the wireless communication may include, for example, Zigbee or Bluetooth communication. The communication protocol is not limited to the above listed examples and may include any type of communication protocol that supports wired or wireless communication.

The peripheral device 50 may include vehicle sensor(s) to measure at least one parameter (for example, vehicle speed) related to the state of the electric vehicle 1. The peripheral device 50 may include an output device (for example, a display, a speaker) to provide the information received from the control unit 120 and/or the vehicle controller 2 in a recognizable format. The peripheral device 50 may work using the DC or AC power supplied from the power converter 30.

Although FIG. 1 shows that the battery pack 10 and the battery management system 100 are physically independent of each other, the battery management system 100 may be included as the component of the battery pack 10.

The battery cooling control apparatus 200 includes a control unit 220. The battery cooling control apparatus 200 may further include at least one of a cooling network 210 or a cooling medium circulation unit 230. The at least one of the cooling network 210 or the cooling medium circulation unit 230 may be provided as the component of the battery pack 10, rather than the component of the battery cooling control apparatus 200.

The cooling medium may include any one of known materials that facilitate cooling, for example, water, carbon dioxide, ammonia or a nonconductive liquid, or a combination of two or more thereof. Preferably, in addition to the cooling effect, the cooling medium may include any one of known materials that have a noncombustible and/or noninflammable property, or a combination of two or more thereof.

The cooling network 210 is provided for cooling at least one of the plurality of battery blocks BB₁~BB_{N}. The cooling network 210 is provided for heat exchange with each of at least one battery block of the plurality of battery blocks BB₁~BB_{N} during the flow of the cooling medium through cooling medium paths inside.

The control unit 220 controls the cooling network 210 according to the battery monitoring information. The battery monitoring information may be provided from the battery management system 100. Alternatively, the control unit 220 may generate the battery monitoring information using sensor(s) equipped inside.

The control unit 220 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors, or electrical units for performing other functions.

The control unit 220 may have a memory device. The memory device may include at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory device may store data and programs required for the operations (for example, performing a battery cooling control method) by the control unit 220. The memory device may store data indicating the results of the operations by the control unit 220. The control unit 220 may include at least one memory device and at least one processor. The control unit 220 may be a stand-alone device that may be made, used and/or sold separately from the other components of the battery cooling control apparatus 200, and may be referred to as 'battery controller'.

The control unit 220 of the battery cooling control apparatus 200 may be replaced with the control unit 120 of the battery management system 100, and in this case, the control unit 220 may be removed from the battery cooling control apparatus 200. Although FIG. 1 shows that the battery pack 10 and the battery cooling control apparatus 200 are physically independent of each other, the battery cooling control apparatus 200 may be included as the component of the battery pack 10.

The electrical energy needed to operate the battery cooling control apparatus 200 may be supplied from at least one of the plurality of battery blocks BB₁~BB_{N}. As an example, a voltage regulator (not shown) may generate a power source voltage using the electrical energy of at least one of the plurality of battery blocks BB₁~BB_{N} and supply it to the battery cooling control apparatus 200, and each component of the battery cooling control apparatus 200 may be activated by the power source voltage.

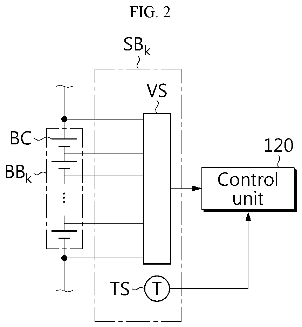

FIG. 2 is a diagram referenced in describing an example of a connection relationship between the battery block and the sensing unit shown in FIG. 1. For convenience of description, FIG. 2 shows only the battery block BBₖ of the plurality of battery blocks BB₁~BB_{N} included in the battery pack 10.

Referring to FIG. 2, the sensing unit 110 includes a sensing circuit SBₖ provided to the battery block BBₖ. Accordingly, those skilled in the art will readily understand that the sensing unit 110 may include a plurality of sensing circuits SB₁~SB_{N.}

The sensing circuit SBₖ may include a temperature sensor TS and further include a voltage detection circuit VS.

The temperature sensor TS is attached to the outer surface of the battery block BBₖ or installed at a predetermined location away from the battery block BBₖ to measure the temperature (i.e., the block temperature) of the battery block BBₖ. The temperature sensor TS may generate a temperature signal indicating the temperature of the battery block BBₖ, and the control unit 120 may collect the temperature signal of the temperature sensor TS.

The voltage detection circuit VS includes at least one voltage sensor. The voltage detection circuit VS may measure a module voltage of the battery block BBₖ. The module voltage is a voltage across the battery block BBₖ. The voltage detection circuit VS may further measure a cell voltage of each battery cell BC included in the battery block BBₖ. The cell voltage is a voltage across the battery cell BC. The voltage detection circuit VS may generate a voltage signal indicating the module voltage of the battery block BBₖ and the cell voltage of each battery cell BC, and the control unit 120 may collect the voltage signal of the voltage detection circuit VS.

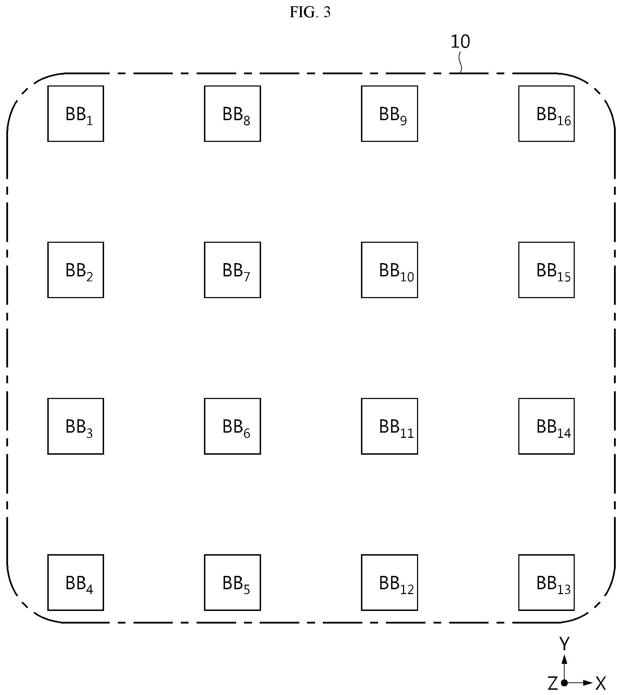

FIGS. 3 to 5 are diagrams referenced in briefly describing the architecture of the cooling network according to the present disclosure. For convenience of description, assume N=16, i.e., the battery pack 10 including 16 battery blocks BB₁~BB₁₆.

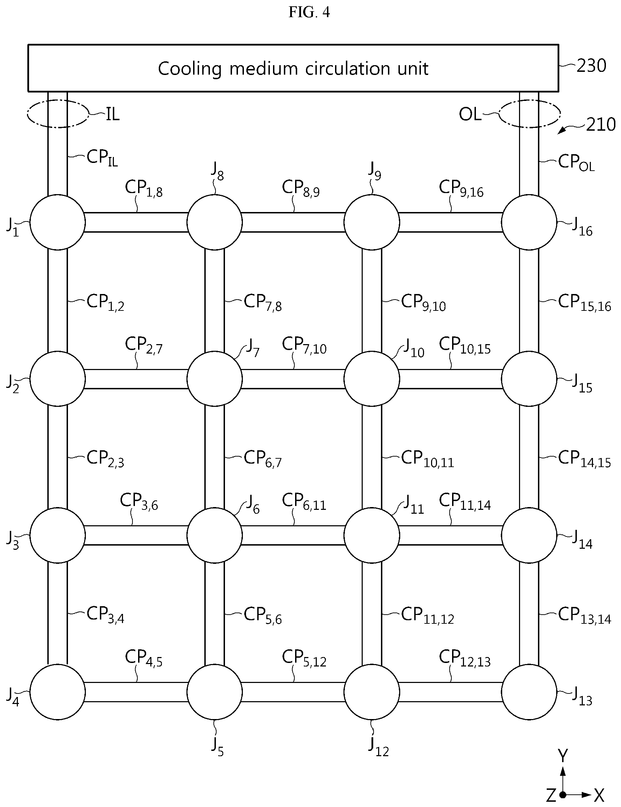

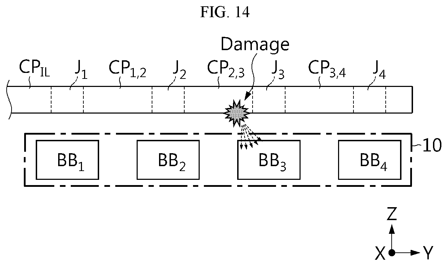

FIG. 3 shows the layout of the battery blocks BB₁~BB₁₆ arranged in a 4x4 matrix when viewed from top with respect to the X-Y plane. FIG. 4 is an example of the cooling network 210 responsible for heat exchange with the battery blocks BB₁~BB₁₆ arranged to form the layout shown in FIG. 3. The cooling network 210 may be positioned on or under the battery blocks BB₁~BB₁₆ along the Z axis (see FIG. 14 as described below).

The cooling network 210 includes a plurality of cooling medium pipes CP and a plurality of electronic valves VL. The plurality of cooling medium pipes CP may be fluidly connected to each other through a plurality of branch nodes J₁~J₁₆ located corresponding to the battery blocks BB₁~BB₁₆, respectively. A branch node Jₖ may be located on or under the battery block BBₖ along the Z axis. In this specification, the 'branch node' may be where one end portion of each of two or more cooling medium pipes CP is in communication with each other. The branch node Jₖ located corresponding to the battery block BBₖ may represent that at least a part of the area of the branch node Jₖ overlaps the area of the battery block BBₖ in a top view (or a bottom view) along the Z axis. For example, there may be an overlap between the area of the branch node J₁ in the X-Y plane in FIG. 4 and the area of the battery block BB₁ in the X-Y plane in FIG. 3.

For reference, when the layout of the battery blocks BB₁~BB_{N} is in the form of a AxB matrix, the cooling network 210 may include {A(A-1)xB(B-1)+2} cooling medium pipes CP. Accordingly, in FIG. 4 in which A=4, B=4, the cooling network 210 includes twenty six cooling medium pipes CP, and the symbols CP_{1,1}~CP_{15,16,} CP_{IL} and CP_{OL} are affixed to the twenty six cooling medium pipes CP.

The cooling medium circulation unit 230 may have a pair of inlet and outlet, and the cooling medium pipe CP_{IL} and the cooling medium pipe CP_{OL} may be in communication with the pair of inlet and outlet of the cooling medium circulation unit 230, respectively. The remaining cooling medium pipes excluding the cooling medium pipe CP_{IL} and the cooling medium pipe CP_{OL} may be in communication with each other between the cooling medium pipe CP_{IL} and the cooling medium pipe CP_{OL}. Hereinafter, for convenience purposes, a location IL where the cooling medium pipe CP_{IL} and the cooling medium circulation unit 230 are in communication with each other will be referred to as 'inlet', and a location OL where the cooling medium pipe CP_{OL} and the cooling medium circulation unit 230 are in communication with each other will be referred to as 'outlet'.

The cooling medium pipe CP_{IL} connects the inlet IL of the cooling network 210 to the branch node J₁. The cooling medium pipe CP_{OL} connects the outlet OL of the cooling network 210 to the branch node J₁₆. The cooling medium pipe CP_{x,y} connects two branch nodes Jₓ, J_{y}.

In FIG. 4, the cooling medium from the cooling medium circulation unit 230 flows into the cooling network 210 through the cooling medium pipe CP_{IL} connected between the branch node J₁ and the inlet IL, and the cooling medium passing through the cooling network 210 flows to the cooling medium circulation unit 230 through the cooling medium pipe CP_{OL} connected between the branch node J₁₆ and the outlet OL.

Two cooling medium pipes CP are fluidly connected to each other through each branch node J_{4,} J₁₃. For example, one end of two cooling medium pipes CP_{3,4}, CP_{4,5} of the twenty six cooling medium pipes CP_{1,1}~CP_{15,16,} CP_{IL,} CP_{OL} is in communication with the branch node J₄.

Three cooling medium pipes CP are fluidly connected to each other through each branch node J_{1,} J_{2,} J_{3,} J_{5,} J_{8,} J_{9,} J₁₂, J_{14,} J_{15,} J₁₆. For example, one end of three cooling medium pipes CP_{IL,} CP_{1,2,} CP_{1,8} of the twenty six cooling medium pipes CP_{1,1}~CP_{15,16,} CP_{IL,} CP_{OL}, is in communication with the branch node J₁.

Four cooling medium pipes CP are fluidly connected to each other through each branch node J_{6,} J_{7,} J_{10,} J₁₁. For example, one end of four cooling medium pipes CP_{3,6,} CP_{5,6,} CP_{6,7,} CP_{6,11} of the twenty six cooling medium pipes CP_{1,1}~CP_{15,16,} CP_{IL,} CP_{OL} is in communication with the branch node J₆.

The electronic valve VL may be installed at each of two end portions of each cooling medium pipe CP. Accordingly, while two electronic valves VL installed at the two end portion of the cooling medium pipe CP are controlled into an open state, the cooling medium may be allowed to flow through the cooling medium pipe CP. In contrast, while at least one of two electronic valves VL installed at the two end portions of the cooling medium pipe CP is controlled into a closed state, the flow of the cooling medium through the cooling medium pipe CP may be blocked. The control unit 220 may control the degree of opening of each electronic valve VL in the open state. That is, the degree of opening of the electronic valve VL may be adjusted between 0% (fully closed state) and 100% (fully open state) in a continuous or stepwise manner.

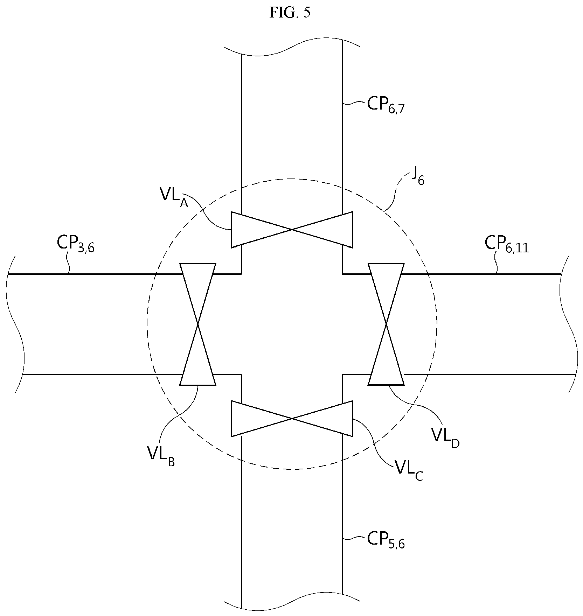

FIG. 5 is a diagram referenced in describing the structure of the branch node shown in FIG. 4. For convenience of description, the description will be made based on the branch node J₆ where one end portion of each of four cooling medium pipes CP is fluidly connected to each other.

Referring to FIG. 5, four electronic valves VL_{A,} VL_{B,} VL_{C,} VL_{D} may be installed at four connection portions of the branch node J₆. In FIG. 5, the symbol 'VL_{A}' is affixed to the electronic valve installed at one side in the Y-axis direction, the symbol 'VL_{C}' is affixed to the electronic valve installed at the other side in the Y-axis direction_{,} the symbol 'VL_{B}' is affixed to the electronic valve installed at one side in the X-axis direction, and the symbol 'VL_{D}' is affixed to the electronic valve installed at the other side in the X-axis direction.

The open/closed state of the electronic valve VL may be changed in response to a valve control signal from the control unit 220. The valve control signal may bring the electronic valve VL into the open or closed state. In addition, the valve control signal may instruct the degree of opening of the electronic valve VL in the open state.

In a situation where the flow of the cooling medium through the branch node J₆ is necessary, the control unit 220 may control two or more electronic valves (for example, VL_{A,} VL_{C}) of the four electronic valves VL_{A,} VL_{B,} VL_{C,} VL_{D} located at the branch node J₆ into the open state.

The control unit 220 may determine any one of the plurality of cooling medium paths that may be provided in the cooling network 210 as a target cooling medium path according to the battery monitoring information of the battery blocks BB₁~BB₁₆.

For reference, different from the branch node (for example, J₆)where four cooling medium pipes CP are in communication with each other, two electronic valves may be located at the branch node (for example, J₄) where two cooling medium pipes CP are in communication with each other, and the location where no electronic valve is present may basically have a closed structure. For example, different from the branch node J₆ of FIG. 5, one side (left side) of the branch node J₄ in the X-axis direction and the other side (lower side) in the Y-axis direction may be blocked.

Likewise, three electronic valves may be located at the branch node (for example, J₁) where three cooling medium pipes CP are in communication with each other, and the location where no electronic valve is present may basically have a closed structure. For example, in contrast to the branch node J₆ of FIG. 5, one side (left side) of the branch node J₁ in the X-axis direction may be blocked.

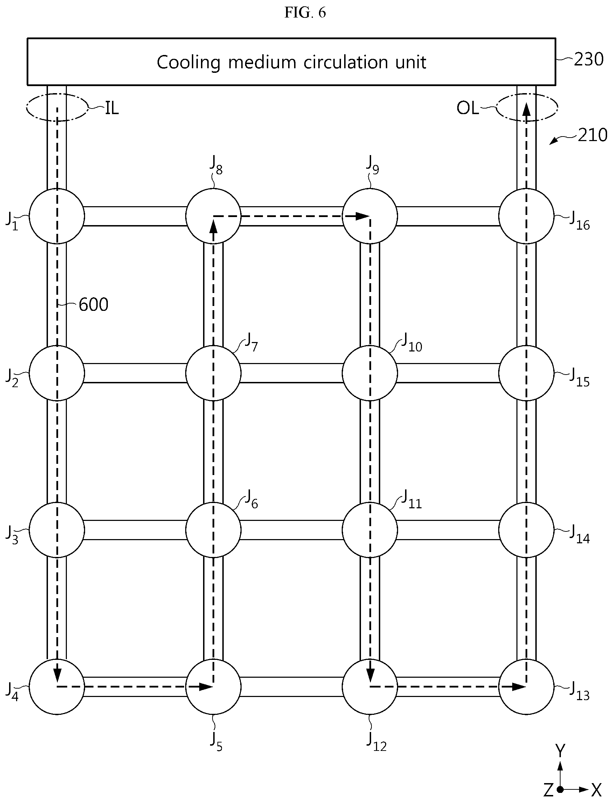

FIG. 6 is a diagram referenced in describing a reference cooling medium path that may be provided in the cooling network. For convenience of description, the indication of the symbol for each cooling medium pipe is omitted.

Referring to FIG. 6, the control unit 220 may determine the reference cooling medium path 600 as the target cooling medium path when none of the battery blocks BB₁~BB₁₆ is identified as having a thermal runaway risk.

The reference cooling medium path 600 may be a preset cooling medium path to evenly cool the battery blocks BB₁~BB₁₆. The control unit 220 may control the cooling network 210 to form the reference cooling medium path 600 between the inlet IL and the outlet OL of the cooling network 210.

The control unit 220 may output the valve control signals corresponding to the reference cooling medium path 600 to the plurality of electronic valves VL. For example, referring to FIG. 5, because the flow of the cooling medium through the branch node J₆ is required to form the reference cooling medium path 600, two electronic valves VL_{A,} VL_{C} of the four electronic valves VL_{A,} VL_{B,} VL_{C,} VL_{D} located at the branch node J₆ may be controlled into the open state, and the remaining two electronic valves VL_{B,} VL_{D} may be controlled into the closed state.

The reference cooling medium path 600 may be set in advance for use to cool the battery blocks BB₁~BB₁₆ in normal situations. FIG. 6 shows that the reference cooling medium path 600 is a path running from the inlet IL to the outlet OL through the plurality of branch nodes J₁~J₁₆ in a sequential order. The reference cooling medium path 600 may be set differently from FIG. 6.

When the reference cooling medium path 600 is formed within the cooling network 210, the cooling medium may flow through all of the plurality of branch nodes J₁~J₁₆, thereby achieving balanced cooling of the battery blocks BB₁~BB₁₆.

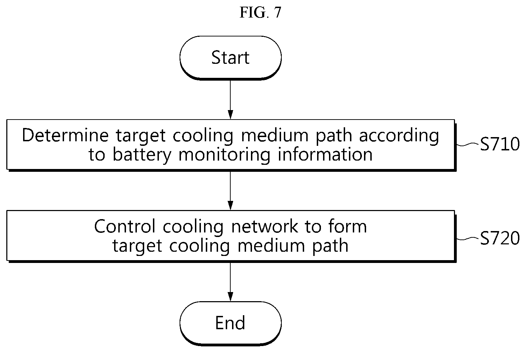

FIG. 7 is a flowchart referenced in briefly describing a battery cooling control method according to another embodiment of the present disclosure. The method according to FIG. 7 may be performed periodically or aperiodically in a repeated manner.

Referring to FIG. 7, in step S710, the control unit 220 determines the target cooling medium path according to the battery monitoring information indicating the state parameter of each of the plurality of battery blocks BB₁~BB_{N}.

In step S720, the control unit 220 controls the cooling network 210 to form the target cooling medium path determined in the step S710 between the inlet IL and the outlet OL of the cooling network 210.

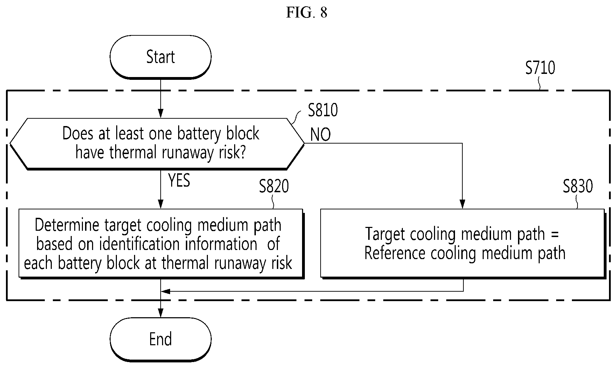

FIG. 8 is a flowchart referenced in briefly describing an example of a set of routines that may be included in the step S710 of FIG. 7.

Referring to FIG. 8, in step S810, the control unit 220 determines, based on the battery monitoring information, whether at least one of the plurality of battery blocks BB₁~BB_{N} has a thermal runaway risk.

The control unit 220 may compare a measured value of at least one state parameter of the battery block BBₖ with a reference range (or a reference value). For example, when the state parameter is 'temperature (block temperature)', its reference range may represent a predetermined normal temperature range. When the state parameter of the battery block BBₖ is outside of the reference range, the battery block BBₖ may be diagnosed as having the thermal runaway risk, and otherwise, the battery block BBₖ may be diagnosed as having no thermal runaway risk. When a value of the step S810 is "Yes", step S820 may be performed. When the value of the step S810 is "No", step S830 may be performed.

In the step S820, the control unit 220 determines the target cooling medium path based on identification information of each battery block having the thermal runaway risk among the plurality of battery blocks BB₁~BB_{N}.

The battery block having the thermal runaway risk may be referred to as "abnormal battery block". The battery block having no thermal runaway risk may be referred to as "normal battery block".

The control unit 220 may separately record the identification information of each abnormal battery block and the identification information of each normal battery block in the memory device. Because the plurality of battery blocks BB₁~BB_{N} are fixedly disposed at different physical areas within the battery pack 10, the identification information of the battery block BBₖ may correspond to a physical area (a sort of address) within the battery pack 10 where the battery block BBₖ is disposed.

In the step S830, the control unit 220 determines the reference cooling medium path 600 as the target cooling medium path.

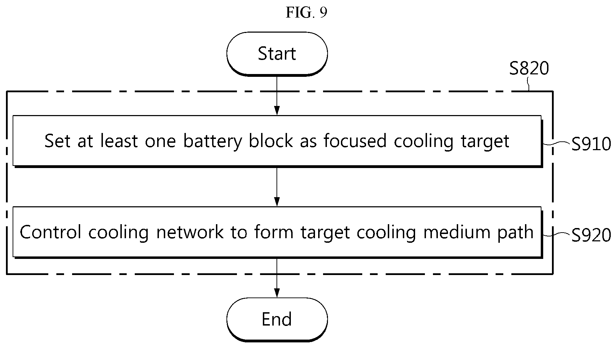

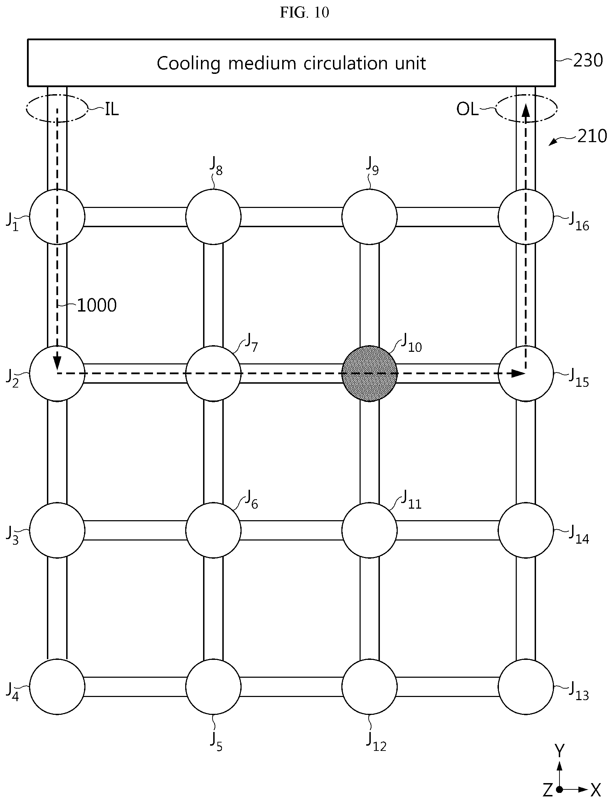

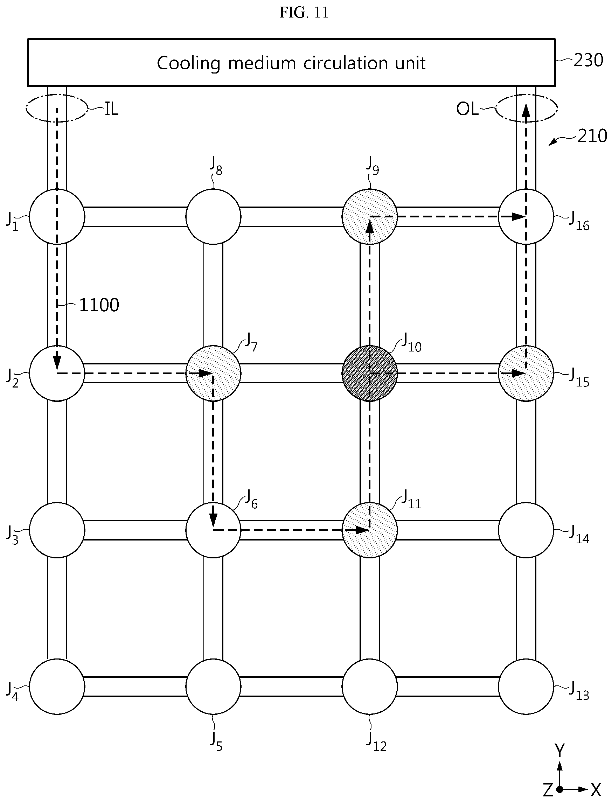

FIG. 9 is a flowchart referenced in briefly describing an example of a set of routines that may be included in the step S820 of FIG. 8, and FIGS. 10 and 11 are diagrams referenced in describing the method of FIG. 9. For convenience of description, in FIGS. 10 and 11, the indication of the symbol for each cooling medium pipe is omitted.

Referring to FIG. 9, in step S910, the control unit 220 sets, based on the identification information of each abnormal battery block, at least one of the plurality of battery blocks BB₁~BB_{N} as a focused cooling target.

In an embodiment, only each abnormal battery block may be set as the focused cooling target.

In another embodiment, each abnormal battery block and each adjacent battery block may be set as the focused cooling target.

In step S920, the control unit 220 determines the target cooling medium path based on the identification information of each battery block set as the focused cooling target.

The memory device may pre-store a cooling control map representing predetermined relationship data between the plurality of identification datasets and the plurality of cooling medium paths. Each identification dataset includes identification information of at least one of the plurality of battery blocks BB₁~BB_{N}. The plurality of identification datasets and the plurality of cooling medium paths may be mapped in a many-to-one or many-to-many relationship.

The control unit 220 may identify any one of the plurality of identification datasets based on the identification information of each battery module set as the focused cooling target. Using the identified identification dataset, the control unit 220 may select at least one of the plurality of cooling medium paths as the target cooling medium path from the cooling control map.

The cooling control map may include a valve control dataset indicating the open/closed state of each of the plurality of electronic valves VL, required to form each cooling medium path. The control unit 220 may transmit the valve control signals based on the valve control dataset corresponding to the target cooling medium path to the plurality of electronic valves VL.

The target cooling medium path determined in the step S920 may be the shortest path passing through each branch node located corresponding to each battery block set as the focused cooling target among the plurality of cooling medium paths that may be provided by the cooling network 210.

FIG. 10 shows an example of the focused cooling target and the target cooling medium path when only the battery block BB₁₀ is an abnormal battery block. In FIG. 10, the branch node J₁₀ is marked with darker shading, showing that the battery block BB₁₀ located corresponding to the branch node J₁₀ has the thermal runaway risk. The control unit 220 may set only the battery block BB₁₀ as the focused cooling target, and accordingly, the cooling medium path 1000 passing through the branch node J₁₀ located corresponding to the battery block BB₁₀ may be determined as the target cooling medium path. The cooling medium path 1000 connects six branch nodes J_{1,} J_{2,} J_{7,} J_{10***,***} J_{15,} J₁₆ between the inlet IL and the outlet OL in a sequential order. The cooling medium path 1000 may be the shortest path passing through the branch node J₁₀. Accordingly, when the cooling medium is allowed to flow through the cooling medium path 1000, it may be possible to achieve more focused cooling for the battery block BB₁₀ than the reference cooling medium path 600, thereby reducing the risk of thermal propagation in the battery block BB₁₀ quickly.

FIG. 11 shows another example of the focused cooling target and the target cooling medium path when only the battery block BB₁₀ is an abnormal battery block. In FIG. 11, the branch nodes J_{7,} J_{9,} J_{11,} J₁₅ are marked with lighter shading, showing that each of the battery blocks BB_{7,} BB_{9,} BB_{11,} BB₁₅ is a battery block adjacent to the battery block BB₁₀.

The control unit 220 may set not only the battery block BB₁₀ but also the adjacent battery blocks BB_{7,} BB_{9,} BB_{11,} BB₁₅ as the focused cooling target. The adjacent battery block may refer to a preset battery block adjacent to the abnormal battery block. The memory device may pre-store data indicating whether the plurality of battery blocks BB₁~BB_{N} are adjacent to each other. Accordingly, the cooling medium path 1100 passing through the branch nodes J_{7,} J_{9,} J_{10,} J_{11,} J₁₅ located corresponding to the battery blocks BB_{7,} BB_{9,} BB_{10***,***} BB_{11,} BB₁₅ set as the focused cooling target may be determined as the target cooling medium path. The cooling medium path 1100 may be the shortest path passing through the branch nodes J_{7,} J_{9,} J_{10,} J_{11,} J₁₅ between the inlet IL and the outlet OL.

Meanwhile, there may be a plurality of shortest cooling medium paths passing through each branch node corresponding to the focused cooling target. For example, in the situation of FIG. 11, the length of the cooling medium path for each of a subset of branch nodes J_{1,} J_{2,} J_{7,} J_{10,} J_{9,} J₁₆, a subset of branch nodes J_{1,} J_{8,} J_{7,} J_{10, J 9,} J₁₆ and a subset of branch nodes J_{1,} J_{8,} J_{9,} J_{10,} J_{15,} J₁₆ is equal to that of the cooling medium path 1000.

In the case of the plurality of shortest cooling medium paths passing through each branch node corresponding to each battery block set as the focused cooling target, the control unit 220 may determine one of them as the target cooling medium path.

In an embodiment, the control unit 220 may calculate, for each of the plurality of cooling medium paths, the sum of block temperatures of the battery blocks corresponding to the branch nodes through which each cooling medium path passes, and determine any one cooling medium path passing through branch nodes having the maximum sum of block temperatures as the target cooling medium path. For example, in the situation shown in FIG. 10, assume that the sum of block temperatures of the battery blocks BB_{1,} BB_{2,} BB₇, BB₁₀, BB₁₅, BB₁₆ corresponding to the branch nodes J_{1,} J₂, J_{7,} J_{10,} J₁₅, J₁₆ is 190°, the sum of block temperatures of the battery blocks BB₁, BB₂, BB₇, BB₁₀, BB₉, BB₁₆ corresponding to the branch nodes J_{1,} J₂, J_{7,} J₁₀, J₉, J₁₆ is 200°, the sum of block temperatures of the battery blocks BB₁, BB_{8,} BB₇, BB_{10,} BB_{9,} BB₁₆ corresponding to the branch nodes J_{1,} J_{8,} J₇, J₁₀, J_{9,} J₁₆ is 180°, and the sum of block temperatures of the battery blocks BB_{1,} BB_{8,} BB_{9,} BB_{10***,***} BB_{15,} BB₁₆ corresponding to the branch nodes J_{1,} J_{8,} J_{9,} J_{10,} J_{15,} J₁₆ is 185°. The control unit 220 may determine another cooling medium path passing through the branch nodes J_{1,} J_{2,} J_{7,} J_{10,} J_{9,} J₁₆ as the target cooling medium path, instead of the cooling medium path 1000.

Alternatively, in the case of the plurality of shortest cooling medium paths passing through each branch node corresponding to each battery block set as the focused cooling target, the control unit 220 may determine at least two of the plurality of cooling medium paths as the target cooling medium path in an alternating (cyclic) manner with a time interval.

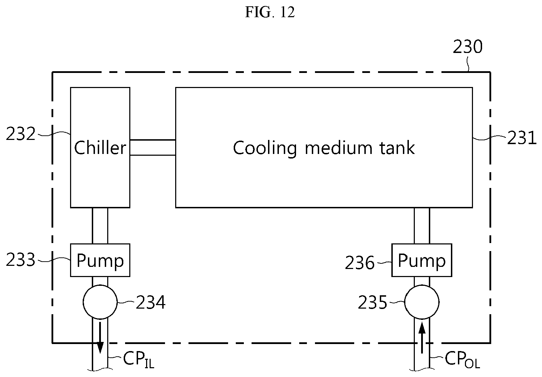

FIG. 12 is a diagram schematically showing the configuration of the cooling medium circulation unit according to an embodiment of the present disclosure.

Referring to FIG. 12, the cooling medium circulation unit 230 may include a cooling medium tank 231 and a chiller 232. The cooling medium circulation unit 230 may further include at least one of a pump 233 or a pump 236.

The cooling medium tank 231 may store the cooling medium leaving the outlet OL of the cooling network 210 and supply the stored cooling medium to the chiller 232. That is, the cooling medium that absorbs heat of at least one battery block BB while flowing along the target cooling medium path is fed into the chiller 232 through the cooling medium tank 231.

The chiller 232 may reduce the temperature of the fed cooling medium and supply it to the pump 233. The pump 233 may supply the cooling medium supplied from the chiller 232 to the inlet IL of the cooling network 210. The cooling medium that returns to the outlet OL through the target cooling medium path may be supplied to the cooling medium tank 231 by the pump 236.

The pump 233 may include a unidirectional pump that forces the cooling medium to flow from the pump 233 toward the inlet IL, or a bidirectional pump that selectively forces the cooling medium to flow in a direction from the pump 233 toward the inlet IL and the opposite direction.

The pump 236 may include a unidirectional pump that forces the cooling medium to flow from the outlet OL toward the pump 236, or a bidirectional pump that selectively forces the cooling medium to flow in a direction from the outlet OL toward the pump 236 and the opposite direction.

The amount the pump 233 forces the cooling medium in and/or out per unit time may be preset. The amount the pump 236 forces the cooling medium in and/or out per unit time may also be preset.

When no damage to the cooling network is detected, the amount the pump 233 and/or the pump 236 forces the cooling medium to flow in and/or out per unit time may be maintained at a predetermined first value. When damage to the cooling network is detected, the amount the pump 233 and/or the pump 236 forces the cooling medium to flow in per unit time may be maintained at a predetermined second value, and the amount the pump 233 and/or the pump 236 forces the cooling medium to flow out per unit time may be maintained at a predetermined third value. The second value may be larger than the first value, and the third value may be smaller than the first value.

By interactions between the cooling medium tank 231, the chiller 232, the pump 233 and/or the pump 236, the flow of the cooling medium in one or two directions within the cooling network 210 may be created or hindered.

The cooling medium circulation unit 230 may further include at least one of a cooling medium sensor 234 or a cooling medium sensor 235. The cooling medium sensor 234 may measure the cooling medium parameter (for example, the flow velocity, the flow rate) of the cooling medium supplied from the cooling medium circulation unit 230 to the cooling network 210 and notify the control unit 220 of the measured value. The cooling medium sensor 235 may measure the cooling medium parameter of the cooling medium supplied from the cooling network 210 to the cooling medium circulation unit 230 and notify the control unit 220 of the measured value.

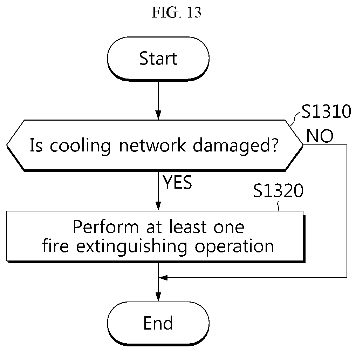

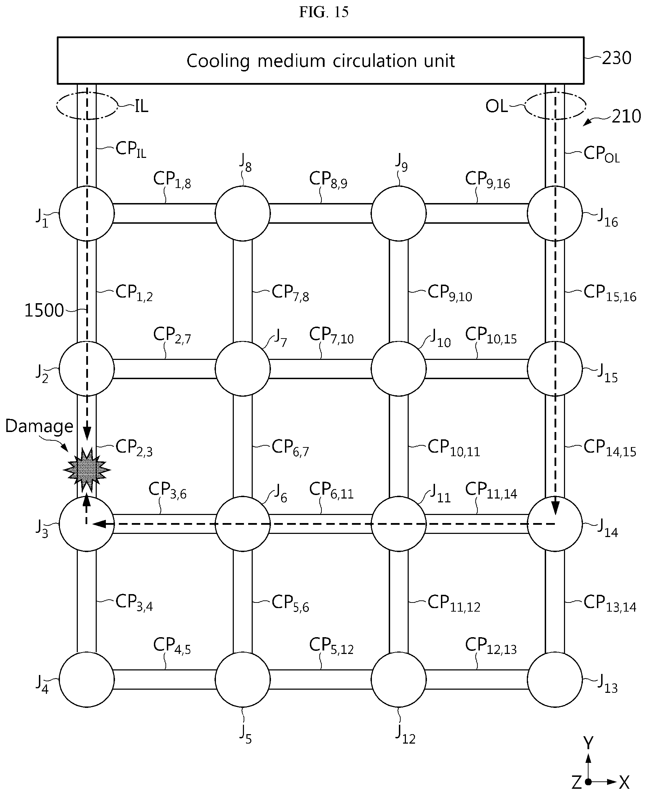

FIG. 13 is a flowchart referenced in briefly describing the battery cooling control method according to still another embodiment of the present disclosure, and FIGS. 14 and 15 are diagrams referenced in describing the method of FIG. 13.

Referring to FIG. 13, in step S1310, the control unit 220 determines whether the cooling network 210 is damaged based on the flow information received from the cooling medium circulation unit 230.

As an example, when the measured value of at least one of the cooling medium sensor 234 or the cooling medium sensor 235 is less than a first set value, it may be determined that a damaged portion is present in the cooling network 210. As another example, when a change rate of the measured value of at least one of the cooling medium sensor 234 or the cooling medium sensor 235 is more than a second set value, it may be determined that a damaged portion is present in the cooling network 210. As still another example, when a difference between the measured value of the cooling medium sensor 234 and the measured value of the cooling medium sensor 235 is equal to or more than a third set value, it may be determined that a damaged portion is present in the cooling network 210. Each set value may be preset. When a value of the step S1310 is "Yes", step S1320 may be performed. When the value of the step S1310 is "No", the method according to FIG. 13 may end.

The damaged portion of the cooling network 210 may be caused by overheating due to fire in the adjacent battery block BB. When the damaged portion occurs in the cooling network 210, the cooling medium may leak out of the cooling network 210 through the damaged portion, resulting in a significant reduction in the measured value of at least one of the cooling medium sensor 234 or the cooling medium sensor 235.

FIG. 14 is a side view (Y-Z plane) showing a placement relationship between the battery blocks BB₁~BB₁₆ shown in FIG. 3 and the cooling network 210 shown in FIG. 4. FIG. 14 shows an exemplary situation of cooling medium leakage into the battery pack 10 through the damaged portion of the cooling network 210.

For convenience of description, the following description will be made based on four leftmost battery blocks BB₁~BB₄ in FIG. 3. FIG. 14 shows that the damaged portion exists the cooling medium pipe CP_{2,3} close to the battery block BB₃, and the corresponding damaged portion may be caused by thermal runaway occurred in the battery block BB₃. Accordingly, at least a part of the outer surface of the battery block BB₃ may be covered by the cooling medium leaking from the cooling medium pipe CP_{2,3} through the corresponding damaged portion. For reference, as the battery block BB₃ has already been identified as an abnormal battery block before the damaged portion is created in the cooling medium pipe CP_{2,3}, such that the target cooling medium path 1500 (in FIG. 15) passing through the branch node J₃ corresponding to the battery block BB₃ may be formed.

In step S1320, the control unit 220 performs at least one fire extinguishing operation.

The control unit 220 may perform a first fire extinguishing operation to increase the amount of cooling medium supplied to the cooling network 210. As an example, the control unit 220 may increase the pumping output of the cooling pump 233 to increase the amount of the cooling medium entering the cooling network 210 through the inlet IL per unit time. As another example, the control unit 220 may control the cooling pump 233 to force the cooling medium to flow from the cooling pump 233 to the inlet IL and control the cooling pump 236 to force the cooling medium to flow from the cooling pump 236 to the outlet OL at the same time. In this case, the cooling medium supply to the cooling network 210 through the inlet IL and the cooling medium supply to the cooling network 210 through the outlet OL may be performed in parallel with each other.

The control unit 220 may perform a second fire extinguishing operation to reduce the amount of the cooling medium released from the cooling network 210. As an example, the control unit 220 may control the electronic valve VL of the cooling medium pipe CP_{OL} connected to the outlet OL of the cooling network 210 into the closed state or reduce the degree of opening of the electronic valve VL in order to reduce the amount of the cooling medium exiting the cooling network 210 through the outlet OL per unit time.

FIG. 15 shows the cooling medium flow within the cooling network 210 during the first fire extinguishing function. FIG. 15 is a top view (X-Y plane) corresponding to FIG. 14, wherein the damage site shown in FIG. 15 corresponds to the damage site shown in FIG. 14. Referring to FIG. 15, when the first fire extinguishing function is performed, the cooling medium flow from the inlet IL to the branch node J₃ and the cooling medium flow from the outlet OL to the branch node J₃ may be created together, thereby simultaneously supplying the cooling medium to two sides of the branch node J₃ along the target cooling medium path 1500.

When the step S1320 is performed, the pressure within the cooling network 210 increases. Accordingly, a large amount of cooling medium may be strongly pumped from the damage site within the cooling network 210 to the battery block BB₃. As a result, a large area of the outer surface of the battery block BB₃ may be covered with the cooling medium fast, thereby suppressing the fire in the battery block BB₃ quickly. In other words, the cooling network 210 acts as a sort of fire extinguisher for the battery pack 10.

The method according to FIG. 13 may be performed in parallel with the method according to FIG. 7 being performed.

While the reference cooling medium path is set as the target cooling medium path, the likelihood of thermal damage to the cooling network 210 by the battery blocks BB₁~BB₁₆ is verylow. This is because the reference cooling medium path may be only set as the target cooling medium path in a situation where none of the battery blocks BB₁~BB₁₆ is identified as having the thermal runaway risk.

Accordingly, it is highly likely that damage to the cooling network 210 identified while the reference cooling medium path is set as the target cooling medium path results from other causes (for example, aging) than high temperature of at least one of the battery blocks BB₁~BB₁₆. Considering the foregoing, the control unit 220 may be configured to perform the step S1320 on the condition that other cooling medium path than the reference cooling medium path is set as the target cooling medium path.

Although FIG. 14 shows that the cooling network 210 is physically spaced apart from the battery pack 10, this is provided by way of illustration. Accordingly, it should be understood that at least a part of the cooling network 210 may be installed in direct contact with the battery blocks BB₁~BB_{N} of the battery pack 10.

Another embodiment of the present disclosure may provide a computer-readable medium having recorded thereon a program for causing a computer to perform the above-described embodiments.

The program may be implemented by hardware components, software components, and/or a combination thereof. The program may be executed by all systems capable of executing computer-readable instructions.

The software may include computer programs, code, instructions or a combination thereof, and may configure a processing device to operate as desired or command the processing device independently or collectively.

The software may be implemented as a computer program including instructions stored on computer-readable storage media. The computer-readable storage media include, for example, magnetic recording media (for example, read-only memory (ROM), random-access memory (RAM), floppy disk, hard disk) and optical reader media (for example, CD-ROM, Digital Versatile Disc (DVD). The computer-readable storage medium may be distributed across computer systems connected via a network to store and execute the computer-readable code in a distributed manner. The recording medium may be read by the computer, stored in the memory and executed by the processor.

The computer-readable medium may be provided in the form of a non-transitory recording medium. Here, the 'non-transitory storage medium' refers to a tangible device and does not include a signal (for example, electromagnetic waves), and this term encompasses semi-permanent data storage on the recording medium and temporary data storage. For example, the 'non-transitory storage medium' may include a buffer in which data is temporarily stored.

Additionally, the program may be provided in such a manner that it is included in a computer program product. The computer program product may be a product that is transacted between a seller and a buyer.

The computer program product may include a software program, and a computer-readable recording medium on which the software program is stored. For example, the computer program product may include a product in the form of a software program (for example, a downloadable application) distributed electronically through an electronic device manufacturer or an electronic market. For electronic distribution, at least a part of the software program may be stored on the recording medium or temporarily created. In this case, the recording medium may be a recording medium of the electronic device manufacturer's server, the electronic market's server or an intermediary server that temporarily stores the software program.

The embodiments of the present disclosure described hereinabove are not realized only through the apparatus and method, and may be implemented through the program that performs the function corresponding to the exemplary configuration of the present disclosure or the recording medium having the program recorded thereon, and such implementation may be easily achieved by those skilled in the art from the disclosure of the embodiments previously described.

Although the present disclosure has been hereinabove described with regard to certain embodiments and drawings, the present disclosure is not limited thereto and it is obvious to those skilled in the art to make various modifications and changes within the scope of the technical aspects of the present disclosure and the appended claims and their equivalents.

Additionally, as many substitutions, modifications and changes may be made to the present disclosure by those skilled in the art without departing from the technical aspects of the present disclosure, the present disclosure is not limited by the above-described embodiments and the accompanying drawings, and some or all of the embodiments may be selectively combined to allow various modifications.

## Claims

1. A battery cooling control apparatus comprising:
a cooling network provided for cooling a plurality of battery blocks; and
a control unit configured to determine a target cooling medium path according to battery monitoring information indicating a state parameter of each of the plurality of battery blocks, and to control the cooling network such that the target cooling medium path is formed between an inlet and an outlet of the cooling network.

2. The battery cooling control apparatus according to claim 1,
wherein the cooling network includes:
a plurality of cooling medium pipes fluidly connected to each other through a plurality of branch nodes located corresponding to the plurality of battery blocks; and
a plurality of electronic valves installed at the plurality of branch nodes.

3. The battery cooling control apparatus according to claim 1,
wherein the control unit is configured to:
determine the target cooling medium path based on identification information of each abnormal battery block among the plurality of battery blocks, and
wherein the abnormal battery block is a battery block having a thermal runaway risk.

4. The battery cooling control apparatus according to claim 3,
wherein the target cooling medium path is a cooling medium path passing through each branch node located corresponding to each abnormal battery block among a plurality of cooling medium paths providable by the cooling network.

5. The battery cooling control apparatus according to claim 3,
wherein the target cooling medium path is a cooling medium path passing through branch nodes located corresponding to each abnormal battery block and each adjacent battery block among a plurality of cooling medium paths providable by the cooling network,
wherein the abnormal battery block is a battery block having the thermal runaway risk, and
wherein the adjacent battery block is a battery block adjacent to the abnormal battery block.

6. The battery cooling control apparatus according to claim 1, further comprising:
a cooling medium circulation unit configured to induce circulation of the cooling medium through the inlet and the outlet of the cooling network.

7. The battery cooling control apparatus according to claim 1,
wherein the control unit is configured to:
perform, when it is determined that the cooling network is damaged, at least one of a first fire extinguishing operation of increasing an amount of cooling medium supplied to the cooling network or a second fire extinguishing operation of reducing an amount of cooling medium released from the cooling network.

8. The battery cooling control apparatus according to claim 7,
wherein during the first fire extinguishing operation, cooling medium supply to the cooling network through the inlet and cooling medium supply to the cooling network through the outlet are performed in parallel.

9. A battery pack comprising the battery cooling control apparatus according to any one of claims 1 to 8.

10. An electric vehicle comprising the battery pack according to claim 9.

11. A battery cooling control method comprising:
determining a target cooling medium path according to battery monitoring information indicating a state parameter of each of a plurality of battery blocks; and
controlling a cooling network provided for cooling the plurality of battery blocks to form the target cooling medium path between an inlet and an outlet of the cooling network.

12. The battery cooling control method according to claim 11,
wherein determining the target cooling medium path is performed based on identification information of each abnormal battery block among the plurality of battery blocks, and
wherein the abnormal battery block is a battery block having a thermal runaway risk.

13. The battery cooling control method according to claim 12,
wherein the target cooling medium path is a cooling medium path passing through each branch node located corresponding to each abnormal battery block among a plurality of cooling medium paths providable by the cooling network.

14. The battery cooling control method according to claim 12,
wherein the target cooling medium path is a cooling medium path passing through each abnormal battery block and each adjacent battery block among a plurality of cooling medium paths providable by the cooling network, and
wherein the adjacent battery block is a battery block adjacent to the abnormal battery block.

15. The battery cooling control method according to claim 11, further comprising:
Performing, when it is determined that the cooling network is damaged, at least one of a first fire extinguishing operation of increasing an amount of cooling medium supplied to the cooling network or a second fire extinguishing operation of reducing an amount of cooling medium released from the cooling network.

16. A computer-readable medium having recorded thereon a program for causing a computer to perform the battery cooling control method according to any one of claims 11 to 15.
